# EUROPÄISCHE PATENTSCHRIFT

(11) **EP 2 009 315 B1**
(45) Veröffentlichungstag und Bekanntmachung des Hinweises auf die Patenterteilung: **18.04.2012**
(21) Anmeldenummer: 08011558.7
(22) Anmeldetag: 26.06.2008
(51) Int. Cl.: F16D 65/097, F16D 65/84

(54) **Bremsbelag für eine Scheibenbremse**
Brake pad for a disc brake
Garniture de frein pour un frein à disque

(30) Priorität: 28.06.2007 DE 102007029839
(43) Veröffentlichungstag der Anmeldung: 31.12.2008
(73) Patentinhaber: Knorr-Bremse Systeme für Nutzfahrzeuge GmbH, 80809 München (DE)
(72) Erfinder: Wimmer. Josef, 94474 Vilshofen (DE); Härtl, Thomas, 94501 Beutelsbach (DE)
(74) Vertreter: Mattusch, Gundula

(56) Entgegenhaltungen:
- EP-A- 1 217 246
- WO-A-2008/022662
- DE-A1- 4 021 093
- DE-A1- 4 101 599
- FR-A- 2 344 751
- JP-A- 60 008 534
- US-A- 4 685 543

## Beschreibung

Die Erfindung betrifft einen Bremsbelag für eine Scheibenbremse nach dem Oberbegriff des Anspruchs 1.

Derartige Bremsbeläge (DE 103 02 334 A1) kommen insbesondere bei Scheibenbremsen für Nutzfahrzeuge zum Einsatz, wo sie betriebsbedingt einer außerordentlich hohen thermischen Belastung ausgesetzt sind, d.h., die beim Bremsen entstehende Reibwärme strahlt beispielsweise über die Belagträgerplatte hin zu in einem Bremssattel der Scheibenbremse integrierten Bauteilen.

Hierzu zählen unter anderem Faltenbälge, mit denen jeweils der Austrittsbereich einer Stellspindel, die Bestandteil einer Zuspanneinrichtung ist, gegenüber dem Bremssattel abgedichtet ist. Durch diese Faltenbälge wird verhindert, dass Schmutz oder Feuchtigkeit in das Innere des Bremssattels eindringen kann, in dem die Zuspanneinrichtung gelagert ist.

Die axial bewegbaren Stellspindeln kontaktieren im Fall einer Bremsung die Druckstücke der Belagträgerplatte, wodurch der Bremsbelag insgesamt gegen eine Bremsscheibe gepresst wird.

Die Faltenbälge bestehen üblicherweise aus einem entsprechend elastischen Material, um die Relativbewegung der Stellspindeln, an denen die Faltenbälge einerseits befestigt sind, gegenüber dem Bremssattel problemlos auszugleichen, mit dem die Faltenbälge andererseits verbunden sind.

Allerdings wirkt sich die genannte thermische Belastung auf die Faltenbälge, die vielfach aus Kunststoff oder einem ähnlichen Material bestehen, äußerst nachteilig aus, da dadurch ihre Lebensdauer herabgesetzt wird.

Um die Betriebssicherheit der Scheibenbremse dauerhaft zu gewährleisten, sind daher Wartungsarbeiten in relativ kurzen Zeitabständen erforderlich, bei denen neben den Faltenbälgen auch weitere durch die thermische Belastung hochbeanspruchte Bauteile ausgetauscht, zumindest jedoch überprüft werden müssen.

Naturgemäß sind solche Wartungsarbeiten, vor allem aber die belastungsbedingten notwendigen Auswechselungen der Bauteile mit erheblichen Kosten verbunden, sowohl hinsichtlich deren Beschaffung wie auch der Montage bzw. Demontage und der notwendigen Stillstandszeit des Fahrzeuges.

In der JP 60 008534 A ist ein Bremsbelag geoffenbart, an dessen Belagträgerplatte rückseitig, also der auf einem Reibbelag abgewandten Seite, eine Wärmeschutzplatte befestigt ist. Diese Befestigung erfolgt durch Vernieten, wozu Nieten sowohl durch die Belagträgerplatte wie auch durch die Wärmeschutzplatte geführt sind.

Aus der DE 41 01 599 A1 ist ein Bremsbelag bekannt, dessen Belagträgerplatte rückseitig mit einem Dämpfungsblech belegt ist, das ebenfalls mit der Belagträgerplatte durch Nieten verbunden ist.

Der Erfindung liegt die Aufgabe zugrunde, einen Bremsbelag der gattungsgemäßen Art so weiterzuentwickeln, dass die Abstrahlung der bei einer Bremsung entstehenden Reibungswärme in Richtung relevanter Funktionsteile der Scheibenbremse verhindert wird.

Diese Aufgabe wird durch einen Bremsbelag mit den Merkmalen des Anspruchs 1 gelöst.

EP-A-1 217 246 offenbart die Merkmale des Oberbegriffs des Anspruchs 1.

Die Erfindung führt vor allem dazu, dass die der Rückseite des Bremsbelages benachbarten Bauteile der Scheibenbremse vor der beim Bremsen entstehenden Wärmestrahlung des Bremsbelages abgeschirmt werden.

Da die erwähnten Faltenbälge bauart- und funktionsbedingt hinsichtlich einwirkender Wärmestrahlung weniger belastbar sind als übrige Bauteile, wirkt sich hier die Erfindung besonders günstig aus.

Gegenüber den bekannten Scheibenbremsen erhöht sich die Standzeit der Faltenbälge, was naturgemäß zu einer Kostenminimierung hinsichtlich notwendiger Wartungsarbeiten führt.

Aber auch dem Faltenbalg benachbarte Bauteile, wie beispielsweise eine Traverse, in der die Stellspindeln geführt sind, sowie die Zuspanneinrichtung, werden durch die gegebene Abschirmung mittels der Wärmeschutzplatte weniger beansprucht.

Damit trägt die Erfindung in signifikanter Weise dazu bei, dass die Standzeit der Scheibenbremse erhöht wird, d.h., die Reparatur- bzw. Wartungsintervalle werden verlängert.

Hieraus ergibt sich eine Kostenreduzierung, zu der auch verringerte Montage- und Materialkosten beitragen.

Wesentlich bei der Realisierung der Erfindung ist, dass die Wärmeschutzplatte abständig zur Belagträgerplatte angeordnet ist, so dass sich eine isolierende Luftschicht ergibt.

Zur Effizienzsteigerung dieser Isolierung ist der gebildete Luftspalt zumindest bereichsweise, vorzugsweise vollumfänglich, nach außen hin offen, so dass kein Wärmestau entstehen kann.

Bevorzugt besteht die Wärmeschutzplatte aus einem Blech, das beispielsweise auf der der Belagträgerplatte zugewandten Seite mit einer Wärmestrahlung reflektierenden Beschichtung versehen sein kann.

Dabei kann die Wärmeschutzplatte in einfacher Art und Weise als Stanzteil ausgebildet sein und eingeprägte Abstandshalter aufweisen, beispielsweise Noppen oder dergleichen, die an der Rückseite der Belagträgerplatte anliegen und die beim Stanzen der Wärmeschutzplatte mit eingebracht werden. Die Höhe der Noppen gibt das Maß des gebildeten Luftspaltes wieder.

Zur Festlegung der Wärmeschutzplatte, die im Überdeckungsbereich mit den Druckstücken entsprechende Ausnehmungen aufweisen kann, sind angeformte Haltezapfen denkbar, die in Haltelaschen der Belagträgerplatte eingreifen, an denen eine Belaghaltefeder befestigt ist.

Diese Haltezapfen können durch entsprechende Bohrungen der Haltelaschen gesteckt und anschließend derart verformt sein, beispielsweise durch Verquetschen, Verbiegen oder Vernieten, dass eine sichere Verbindung der Wärmeschutzplatte mit der Belagträgerplatte gewährleistet ist.

Alternativ oder ergänzend können Ausnehmungen in der Wärmeschutzplatte, die von den Druckstücken der Belagträgerplatte durchtreten werden, im Randbereich mit Klemmnasen versehen sein, durch die beim Aufschieben der Wärmeschutzplatte auf die Druckstücke eine sozusagen Verkrallung der Klemmnasen mit den Druckstücken erfolgt, vergleichbar dem Klemmscheiben-Prinzip.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

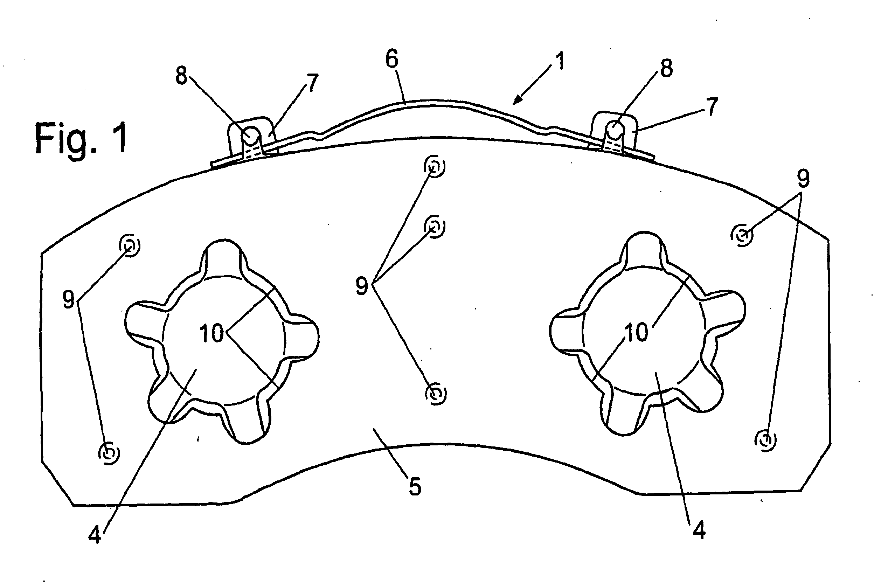

- Figur 1: einen erfindungsgemäßen Bremsbelag in einer Rückansicht

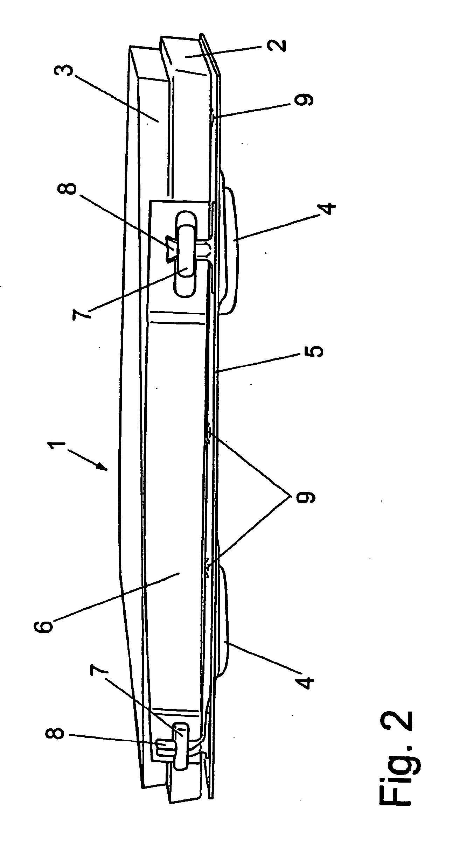

- Figur 2: den Bremsbelag in einer Draufsicht.

In den Figuren ist ein Bremsbelag für eine Scheibenbremse, insbesondere für ein Nutzfahrzeug dargestellt, der eine Belagträgerplatte 2 aufweist, die an der Vorderseite einen Reibbelag 3 trägt.

Auf der gegenüberliegenden Rückseite weist die Belagträgerplatte 2 zwei angeformte Druckstücke 4 auf, an denen in Funktionsstellung jeweils eine nicht dargestellte Stellspindel einer Zuspanneinrichtung der Scheibenbremse anliegt.

Um eine Wärmestrahlung, wie sie beim Bremsen entsteht, in Richtung der Stellspindeln abzuschirmen, ist erfindungsgemäß an der Rückseite der Belagträgerplatte 2 eine Wärmeschutzplatte 5 vorgesehen, die abständig zur Belagträgerplatte 2 angeordnet ist und diese mit Ausnahme der Druckstücke 4 überdeckt.

Zur Abstandshaltung der Wärmeschutzplatte 5 gegenüber der Belagträgerplatte 2 sind unter Bildung eines Luftspaltes 9 in die Wärmeschutzplatte 5 Noppen 9 eingeprägt, mit denen sich die Wärmeschutzplatte 5 an der Belagträgerplatte 2 abstützt. Diese Noppen 9 sind auf der gesamten Fläche verteilt, wobei deren Anzahl und Höhe ausschließlich von den Erfordernissen bestimmt wird.

Zur Befestigung der Wärmeschutzplatte 5 an der Belagträgerplatte 2 und zwar so, dass die Wärmeschutzplatte 5 unverlierbar an der Belagträgerplatte 2 gehalten wird, sind an die Wärmeschutzplatte 5 in einem oberen Randbereich Haltezapfen 8 abgewinkelt angeformt und jeweils durch eine Bohrung einer Haltelasche 7 der Belagträgerplatte 2 gesteckt und nach erfolgter Montage durch Verformen mit dieser formschlüssig verbunden. Daneben dienen die Haltelaschen 7 der Befestigung einer Belaghaltefeder 6, die gleichfalls von den Haltezapfen 8 gesichert ist.

Zum Durchtritt der Druckstücke 4 durch die Wärmeschutzplatte 5 sind darin Ausnehmungen vorgesehen, die bereichsweise durch Klemmnasen 10 begrenzt sind, die sich beim Aufschieben der Wärmeschutzplatte 5 auf die Druckstücke 4 leicht verformen und aufgrund ihrer Rückstellkräfte klemmend an der zugeordneten Oberfläche der Druckstücke 4 anliegen, so dass ein Abziehen der Druckplatte 5 von den Druckstücken 4, unabhängig von der Befestigung mittels der Haltezapfen 8, nicht möglich ist.

## Patentansprüche

1. Bremsbelag für eine Scheibenbremse, mit einer Belagträgerplatte (2), die an einer Vorderseite einen Reibbelag (3) trägt und die auf der gegenüberliegenden Rückseite mit mindestens einem angeformten Druckstück (4) versehen ist, **dadurch gekennzeichnet, dass** die Rückseite der Belagträgerplatte (2) von einer abständig dazu angeordneten Wärmeschutzplatte (5) überdeckt oder weitgehend überdeckt ist, die durch angeschlossene Haltemittel unverlierbar mit der Belagträgerplatte (2) verbunden ist, wozu die Haltemittel aus Haltezapfen (8) bestehen, die an der Wärmeschutzplatte (5) befestigt sind und die in Haltelaschen (7) der Belagträgerplatte (2) eingreifen, oder aus im Durchtrittsbereich der Druckstücke (4) durch die Wärmeschutzplatte (5) bereichsweise vorgesehene Klemmnasen (10), die klemmend mit den Druckstücke (4) korrespondieren.

2. Bremsbelag nach Anspruch 1, **dadurch gekennzeichnet dass** die Wärmeschutzplatte (5) aus Blech besteht.

3. Bremsbelag nach Anspruch 1 oder 2, **dadurch gekennzeichnet, dass** die Wärmeschutzplatte (5) auf ihrer der Belagträgerplatte (2) zugewandten Seite mit einer Wärmestrahlung reflektierenden Beschichtung versehen ist.

4. Bremsbelag nach einem der vorhergehenden Ansprüche, **dadurch gekennzeichnet, dass** die Wärmeschutzplatte (5) auf ihrer der Belagträgerplatte (2) zugewandten Seite mit Noppen (9) versehen ist, die sich an der Rückseite der Belagträgerplatte (2) abstützen.

5. Bremsbelag nach einem der vorhergehenden Ansprüche, **dadurch gekennzeichnet, dass** die Noppen (9) eingeprägt sind.

6. Bremsbelag nach einem der vorhergehenden Ansprüche, **dadurch gekennzeichnet, dass** die Haltezapfen (8) nach einer Montage der Wärmeschutzplatte (5) durch Verformen an den Haltelaschen (7) gehalten sind.

7. Bremsbelag nach einem der vorhergehenden Ansprüche, **dadurch gekennzeichnet, dass** mittels der Haltezapfen (8) eine auf die Haltelaschen (7) aufgesetzte Belaghaltefeder (6) gehalten ist.

8. Bremsbelag nach einem der vorhergehenden Ansprüche, **dadurch gekennzeichnet, dass** die Wänneschutzplatte (5) als Stanzteil ausgebildet ist.

9. Bremsbelag nach einem der vorhergehenden Ansprüche, **dadurch gekennzeichnet, dass** die Haltezapfen (8) durch Verquetschen, Verbiegen, Vernieten oder dergleichen verformt sind.

10. Bremsbelag nach einem der vorhergehenden Ansprüche, **dadurch gekennzeichnet, dass** die Haltezapfen (8) einstückig mit der Wärmeschutzplatte (5) verbunden sind

## Claims

1. Brake lining for a disc brake, comprising a lining support plate (2) carrying a frictional lining (3) on a front side and provided with at least one integrally formed pressing element (4) on the opposite rear side, **characterised in that** the rear side of said lining support plate (2) is covered or largely covered by a thermal protection plate (5) disposed at a distance therefrom, which is securely connected by attached holding means to said lining support plate (2), to which end said holding means consist of holding pins (8) fastened on said thermal protection plate (5) and engaged in holding lugs (7) of said lining support plate (2), or of clamping projections (10) corresponding to said pressing elements (4) with clamping action, which are provided in regions in the region in which said pressing elements (4) penetrate through said thermal protection plate (5).

2. Brake lining according to Claim 1, **characterised in that** said thermal protection plate (5) is made of sheet metal.

3. Brake lining according to Claim 1 or 2, **characterised in that** said thermal protection plate (5) is provided with a coating reflecting a thermal radiation on its side facing said lining support plate (2).

4. Brake lining according to any of the preceding Claims, **characterised in that** said thermal protection plate (5) is provided with nubs (9) on its side facing said lining support plate (2), which nubs are supported on the rear side of said lining support plate (2).

5. Brake lining according to any of the preceding Claims, **characterised in that** said nubs (9) are embossed.

6. Brake lining according to any of the preceding Claims, **characterised in that** said holding pins (8) are held by deformation on said holding lugs (7) after assembly of said thermal protection plate.

7. Brake lining according to any of the preceding Claims, **characterised in that** a lining-holding spring (6) is maintained by means of said holding pins (8), which is placed on said holding lugs (7).

8. Brake lining according to any of the preceding Claims, **characterised in that** said thermal protection plate (5) is formed as punched element.

9. Brake lining according to any of the preceding Claims, **characterised in that** said holding pins (8) are deformed by squeezing, bending, riveting or similar operations.

10. Brake lining according to any of the preceding Claims, **characterised in that** said holding pins (8) are integrally connected to said thermal protection plate (5).

## Revendications

1. Garniture de frein pour un frein à disque, comprenant une plaque d'appui de garniture (2) portant une garniture de frottement (3) d'un côté avant et pourvue d'au moins un élément presseur (4) intégralement y formé du côté oppose derrière, **caractérisée en ce que** la face arrière de ladite plaque d'appui de garniture (2) est chevauchée ou largement chevauchée par une plaque de protection thermique (5) écartée d'elle, qui est raccordée, de façon imperdable, par des moyens de retenue reliés à ladite plaque d'appui de garniture (2), à laquelle fin lesdits moyens de retenue consistent chevilles de retenue (8) fixées à ladite plaque de protection thermique (5) et en prise dans des éclisses de retenue (7) de ladite plaque d'appui de garniture (2), ou des talons de serrage (10) en correspondance avec lesdits éléments presseurs (4) à action de serrage, qui sont disposés dans des régions dans lesquelles lesdits éléments presseurs (4) pénètrent à travers ladite plaque de protection thermique (5).

2. Garniture de frein selon la revendication 1, **caractérisée en ce que** ladite plaque de protection thermique (5) est faite en tôle.

3. Garniture de frein selon la revendication 1 ou 2, **caractérisée en ce que** ladite plaque de protection thermique (5) est munie d'un revêtement réfléchissant un rayonnement thermique de son côté en face de la plaque d'appui de garniture (2).

4. Garniture de frein selon une quelconque des revendications précédentes, **caractérisée en ce que** ladite plaque de protection thermique (5) est munie des nopes (9) de son côté en face de ladite plaque d'appui de garniture (2), à ces nopes s'appuyant du côté arrière de ladite plaque d'appui de garniture (2).

5. Garniture de frein selon une quelconque des revendications précédentes, **caractérisée en ce que** lesdites nopes (9) sont empreintes.

6. Garniture de frein selon une quelconque des revendications précédentes, **caractérisée en ce que** lesdites chevilles de retenue (8) sont retenues par déformation sur lesdites éclisses de retenue (7) après le montage de ladite plaque de protection thermique.

7. Garniture de frein selon une quelconque des revendications précédentes, **caractérisée en ce qu'**un ressort de retenue de garniture (6) est tenue moyennant lesdites chevilles de retenue (8), qui est placé sur lesdites éclisses de retenue (7).

8. Garniture de frein selon une quelconque des revendications précédentes, **caractérisée en ce que** ladite plaque de protection thermique (5) est formée en tant qu'une pièce de découpage.

9. Garniture de frein selon une quelconque des revendications précédentes, **caractérisée en ce que** lesdites chevilles de retenue (8) sont déformées par sertissage, pliage, rivetage ou des opérations similaires.

10. Garniture de frein selon une quelconque des revendications précédentes, **caractérisée en ce que** lesdites chevilles de retenue (8) sont intégralement raccordées à ladite plaque de protection thermique (5).
